# EUROPEAN PATENT SPECIFICATION

(11) **EP 2 738 243 B1**
(45) Date of publication and mention of the grant of the patent: **05.10.2016**
(21) Application number: 12820381.7
(22) Date of filing: 15.05.2012
(51) Int. Cl.: C11B 3/10, A23D 9/02, B01J 20/12

(54) **PURIFIED GLYCERIDE COMPOSITION AND METHOD FOR PRODUCING PURIFIED GLYCERIDE COMPOSITION**
GEREINIGTE GLYCERIDZUSAMMENSETZUNG UND VERFAHREN ZUR HERSTELLUNG DER GEREINIGTEN GLYCERIDZUSAMMENSETZUNG
COMPOSITION GLYCÉRIDIQUE PURIFIÉE ET SON PROCÉDÉ DE PRODUCTION

(30) Priority: 29.07.2011 JP 2011166894
(43) Date of publication of application: 04.06.2014
(73) Proprietor: The Nisshin Oillio Group, Ltd., Chuo-ku Tokyo 104-8285 (JP)
(72) Inventor: HIRAI, Hiroshi, Yokosuka-shi Kanagawa 239-0832 (JP); IKUINA, Junichi, Yokosuka-shi Kanagawa 239-0832 (JP)
(74) Representative: KATZAROV S.A.
(86) International application number: PCT/JP2012/062383
(87) International publication number: WO 2013/018412

(56) References cited:
- EP-A1- 0 507 217
- WO-A1-2010/063450
- WO-A1-2010/126136
- WO-A1-2011/040539
- WO-A1-2011/081119
- JP-A- 2011 074 358
- JP-A- 2011 147 436
- C.A. Okwara ET AL: "Caustic Activation of Local Clays for Palm Oil Bleaching", Journal of Engineering and Applied Sciences 1 (4), 1 January 2006 (2006-01-01), pages 526-529, XP055164777, Retrieved from the Internet: URL:http://docsdrive.com/pdfs/medwelljourn als/jeasci/2006/526-529.pdf [retrieved on 2015-01-26]
- MUHAMAD RODDY RAMLI ET AL: "Effects of Degumming and Bleaching on 3-MCPD Esters Formation During Physical Refining", JOURNAL OF THE AMERICAN OIL CHEMISTS' SOCIETY, SPRINGER-VERLAG, BERLIN/HEIDELBERG, vol. 88, no. 11, 3 June 2011 (2011-06-03), pages 1839-1844, XP019975780, ISSN: 1558-9331, DOI: 10.1007/S11746-011-1858-0
- FRANK PUDEL ET AL: "On the necessity of edible oil refining and possible sources of 3-MCPD and glycidyl esters", EUROPEAN JOURNAL OF LIPID SCIENCE AND TECHNOLOGY, vol. 113, no. 3, 1 March 2011 (2011-03-01) , pages 368-373, XP55027580, ISSN: 1438-7697, DOI: 10.1002/ejlt.201000460

## Description

### TECHNICAL FIELD

The present invention relates to a purified glyceride composition, and a method for producing the purified glyceride composition.

### BACKGROUND ART

In recent years, various attempts have been made to improve qualities of oils and fats such as flavor and stability. Various elements are involved in deterioration in quality of oils and fats. For example, it is known that an oxirane structure as a three-membered ring ether is likely to cause a chemical reaction such as polymerization since it is chemically unstable and thus has high reactivity. Such chemical reaction may cause deterioration in quality of oils and fats.

Some glyceride compositions contains a trace amount of a fatty acid ester of 3-chloropropane-1,2-diol which may be derived from a fatty acid ester of glycidol as a kind of an epoxide having such oxirane structure. The fatty acid ester of 3-chloropropane-1,2-diol may cause separation of a fatty acid to form 3-chloropropane-1,2-diol. It has been said that a high concentration of 3-chloropropane-1,2-diol and a derivative thereof exerts an adverse influence on health. However, it cannot be considered that a small amount of 3-chloropropane-1,2-diol existing in oils and fats such as vegetable oil, which has been ingested over long years, immediately exerts an adverse influence on health. Although reference intake values or the like of 3-chloropropane-1,2-diol are not established, it is required to reduce the amount existing in the glyceride composition as much as possible.

To cope with the problems mentioned above, for example, Patent Document 1 discloses a method in which a glyceride composition containing at least one selected from the group consisting of 3-chloropropane-1,2-diol, a fatty acid ester of 3-chloropropane-1,2-diol, glycidol, and a fatty acid ester of glycidol and/or containing 3% by mass or more of diglyceride is subjected to a deodorization treatment or the like under specific temperature conditions. According to this method, it is possible to reduce the contents of the fatty acid ester of glycidol, the fatty acid ester of 3-chloropropane-1,2-diol and the like in the glyceride composition.

As mentioned above, there has been made a study on a method for more effectively reducing the content of 3-chloropropane-1,2-diol, and the fatty acid ester of 3-chloropropane-1,2-diol in the glyceride composition.

Patent Document 1: Japanese Unexamined Patent Application, Publication No. 2011-74358

### DISCLOSURE OF THE INVENTION

### Problems to be Solved by the Invention

The present invention has been made in view of these circumstances, and an object thereof is to provide a purified glyceride composition containing less amount of 3-chloropropane-1,2-diol and a fatty acid ester of 3-chloropropane-1,2-diol, and a method for producing the purified glyceride composition.

### Means for Solving the Problems

The present inventors have intensively studied so as to solve the problems mentioned above and found that formation of 3-chloropropane-1,2-diol, and a fatty acid ester of 3-chloropropane-1,2-diol in a purified glyceride composition is suppressed by bringing a glyceride composition, which has not been subjected to a deodorization step, into contact with an alkaline white clay (hereinafter also referred to as an "alkaline clay") resulting in reduction of the contents of these components, thus completing the present invention. Specifically, the present invention provides the followings.
(1) A method for producing a purified glyceride composition, characterized by comprising a step of an alkaline clay treatment wherein a glyceride composition, which has not been subjected to a deodorization step, and an alkaline clay are brought into contact with each other, wherein the alkaline clay has the following composition: 50 to 60% by mass of SiO₂, 10 to 20% by mass of AlᵤO₃, 3 to 10% by mass of Fe₂O₃, 2 to 9% by mass of MgO and 1 to 5% by mass of CaO.
(2) The method for producing the purified glyceride composition according to (1), wherein the step of an alkaline clay treatment is a bleaching step, and a deodorization step is further included after the step of the alkaline clay treatment.
(3) The method for producing the purified glyceride composition according to (2), wherein the deodorization step is performed under temperature conditions of 100 to 260°C.
(4) The method for producing the purified glyceride composition according to (2) or (3), further including a re-purification step after the deodorization step.
(5) The method for producing the purified glyceride composition according to (4), wherein the re-purification step includes a re-bleaching step.
(6) The method for producing the purified glyceride composition according to (5), wherein the re- bleaching step is performed by bringing into contact with an acid clay.
(7) The method for producing the purified glyceride composition according to any one of (1) to (6), wherein the glyceride composition is palm oil.

### Effects of the Invention

According to the present invention, it is possible to obtain a purified glyceride composition containing less amount of 3-chloropropane-1,2-diol, and a fatty acid ester of 3-chloropropane-1,2-diol.

### PREFERRED MODE FOR CARRYING OUT THE INVENTION

Embodiments of the present invention will be specifically described below. In the present invention, a glyceride composition contains glyceride in which one to three fatty acids are ester-bonded to glycerol, and also contains diglyceride (diacylglycerol), monoglyceride (monoacylglycerol), in addition to triglyceride (triacylglycerol) as a main component of oils and fats. Components other than glycerides derived from animal and vegetable oils and fats, such as plant sterols, lecithin, antioxidative components, and pigment component, may be included, and glycerides preferably account for 95% by mass or more of the glyceride composition.

### (Alkaline Clay Treatment Step)

A method for producing a purified glyceride composition is characterized by bringing a glyceride composition, which has not been subjected to a deodorization step, into contact with an alkaline clay. Preferably, the bleaching step of the glyceride composition is performed using an alkaline clay.

### [Alkaline Clay (Alkaline White Clay)]

An acid clay has hitherto been used to remove a pigment etc. in a glyceride composition. However, the present inventors have intensively studied and found that use of an alkaline white clay (alkaline clay) in place of the acid clay enables not only removal of a pigment or the like in the glyceride composition, but also suppression of formation of 3-chloropropane-1,2-diol (hereinafter referred to as 3-MCPD) and/or a fatty acid ester of 3-chloropropane-1,2-diol (hereinafter referred to as a fatty acid ester of 3-MCPD) in the glyceride composition, thus effectively realizing reduction of the contents of these components.

This action is not clear, but is estimated as follows. It is considered that, in any one of steps to the deoxidization step, a small amount of a chlorine compound exists in a glyceride composition, and this chlorine compound reacts under heating conditions in the subsequent deodorization step to form 3-MCPD. However, it is considered that, in the present invention, an alkaline clay effectively causes adsorption or decomposition of this chlorine compound through an alkaline clay treatment step using the alkaline clay, thus enabling remarkable reduction of the amount of 3-MCPD which may be formed in a deodorization step. It is estimated that the effects of the present invention are exerted since adsorbability or decomposability of such chlorine compound is not possessed by a white clay or an acid clay, but is possessed by an alkaline clay.

The alkaline clay used in a method for producing a purified glyceride composition of the present invention is not particularly limited as long as it is a white clay (i.e. alkaline white clay) wherein when a white clay is added in water, an aqueous solution containing the alkaline clay takes on an alkaline pH, but is preferably white clay taking on the pH of 8.5 or higher because of its high adsorbability and decomposability to a chlorine compound.

The alkaline clay used in a method for producing a purified glyceride composition of the present invention has the following composition (unit: % by mass).
SiO₂ (50 to 60)
Al₂O₃ (10 to 20)
Fe₂O₃ (3 to 10)
MgO (2 to 9)
CaO (1 to 5)

The amount of the alkaline clay used in the alkaline clay treatment step is preferably 0.5% by mass or more, 0.6% by mass or more, 0.7% by mass or more, or 0.8% by mass or more, based on the amount of a glyceride composition, so as to effectively adsorb or decompose a chlorine compound in a glyceride composition and to suppress formation of 3-MCPD and/or a fatty acid ester of 3-MCPD in a purified glyceride composition to obtain sufficient effect of reducing the contents of these components.

The amount of the alkaline clay used in the alkaline clay treatment step is preferably 3.0% by mass or less, 2.9% by mass or less, 2.8% by mass or less, or 2.5% by mass or less, based on the amount of a glyceride composition, since a chlorine compound in a glyceride composition can be effectively adsorbed or decomposed and formation of 3-MCPD and/or a fatty acid ester of 3-MCPD in a purified glyceride composition can be suppressed to sufficiently reduce the contents of these components, even if the amount is not an excessive amount.

The conditions in the alkaline clay treatment step are not particularly limited and may be those of a bleaching step used in a usual method for producing oils and fats. For example, after adding an alkaline clay to a glyceride composition, heating may be performed under reduced pressure at 80 to 150°C for 5 to 60 minutes. After completion of the alkaline clay treatment step, the alkaline clay is removed by filtration or the like, thus making it possible to obtain a glyceride composition (bleached oil) subjected to an alkaline clay treatment.

There is no particular limitation on the method in which a glyceride composition is brought into contact with an alkaline clay and, for example, a treatment can also be performed using the alkaline clay after performing the bleaching step using a white clay or an activated carbon. It is also possible to perform the alkaline clay treatment step (this step may be a bleaching step) by coexistence of a white clay other than the alkaline clay or an activated carbon. It is also possible that a glyceride composition is brought into contact with an alkaline clay by filling the alkaline clay in a filter or a column, and passing the glyceride composition through the filter or column.

### [Glyceride Composition]

In a method for producing a purified glyceride composition of the present invention, it is possible to use, as a glyceride composition, purified oil subjected to a purification step excluding a deodorization step (for example, degumming step, deoxidization step, washing step, etc.). The glyceride composition, which is not subjected to the deodorization step, is preferable in that neither 3-MCPD nor a fatty acid ester of 3-MCPD is formed. Particularly, unpurified crude oil, degummed oil, deoxidized oil, or bleached oil purified by a conventional method is preferable, and deoxidized oil or bleached oil is more preferable. For example, it is possible to use vegetable oils such as rapeseed oil, soybean oil, rice oil, safflower oil, grape seed oil, sunflower oil, wheat germ oil, corn oil, cottonseed oil, sesame oil, peanut oil, flaxseed oil, perilla oil, olive oil, palm oil, and coconut oil; mixed vegetable oils prepared by mixing two or more kinds of these oils; or edible fractionated oils prepared by fractionating these oils, such as palm olein, palm stearin, super palm olein, and palm midfraction; hydrogenated oil and transesterified oil thereof; and edible oils prepared by a direct esterification reaction, such as medium chain fatty acid triglyceride. Since 3-MCPD and/or a fatty acid ester of 3-MCPD tend(s) to be frequently generated in oils and fats containing comparatively large amount of partial glyceride, it is particularly preferred to use oils and fats derived from palm, rice oil, transesterified oil, and the like as raw materials since high effect of reducing 3-MCPD and/or a fatty acid ester of 3-MCPD of the present invention is exerted. It is possible to use a conventional method as a purification method before and after an alkaline clay treatment step of the present invention. Specifically, the purification method includes a chemical purification (chemical refining) method and a physical purification (physical refining) method, and both purification methods may be used. According to the former chemical purification method, crude oil obtained by expression and extrusion of plants as raw materials is purified through a degumming treatment, a deoxidation treatment, a bleaching treatment, a dewaxing treatment, and a deodorization treatment to form purified oil. On the other hand, the latter physical purification method is a method which is often used in palm oil, coconut oil, and the like, and crude oil obtained by expression of palm, coconut and the like as raw materials is purified through a degumming treatment, a bleaching treatment, and a deoxidization/deodorization treatment to form purified oil. [Specification of Content(s) of 3-MCPD and/or a Fatty Acid Ester of 3-MCPD in Purified Glyceride Composition]

According to the present invention, formation of 3-MCPD and/or a fatty acid ester of 3-MCPD in a purified glyceride composition is suppressed by the alkaline clay treatment step, thus enabling reduction of the contents of these components. The content(s) of 3-MCPD and/or a fatty acid ester of 3-MCPD in the purified glyceride composition is/are specified as amount(s) expressed in terms of separated 3-MCPD using a modified method of the German standard method (DGF Standard Methods C-III 18(09)).

Specifically, sample oils and fats are collected and an internal standard substance is added, and then a methanol solution of sodium methoxide is added. The mixture is reacted at room temperature and an ester is decomposed by saponification. Subsequently, an aqueous sodium bromide solution containing a small amount of acetic acid, and hexane are added thereto, followed by mixing and further removal of the hexane. At this time, 3-MCPD and a 3-MCPD fatty acid ester are entirely converted into separated 3-MCPD. Thereafter, derivatization with phenylboric acid is performed, the obtained derivative is extracted with hexane and the measurement is performed by a gas chromatography mass spectrometer. Then, using the chromatogram obtained by the measurement with the gas chromatography mass spectrometer, the ionic strength of the internal standard is compared with that of the 3-MCPD, thereby calculating the total amount of the 3-MCPD and the 3-MCPD fatty acid ester in oils and fats in terms of separated 3-MCPD.

According to a method for preparing a measurement sample in the conventional German standard method, 3-MCPD, a fatty acid ester of 3-MCPD, glycidol, and a fatty acid ester of glycidol are entirely converted into separated 3-MCPD. Therefore, the measured value by the German standard method becomes the value expressed in terms of 3-MCPD of the total content of 3-MCPD, a fatty acid ester of 3-MCPD, glycidol, and a fatty acid ester of glycidol. Therefore, such method has a problem that the contents of glycidol and a fatty acid ester of glycidol are also included when it is intended to measure the total content of only 3-MCPD, and a fatty acid ester of 3-MCPD.

Thus, the present inventors have intensively studied and found that such problem can be solved by using an aqueous sodium bromide solution containing a small amount of acetic acid as mentioned above in place of using an aqueous sodium chloride solution containing a small amount of acetic acid like a method of the prior art. Therefore, according to the modified method of the German standard method, since only 3-MCPD, and a fatty acid ester of 3-MCPD are converted into separated 3-MCPD, the total content of only 3-MCPD, and a fatty acid ester of 3-MCPD can be calculated by the value expressed in terms of 3-MCPD.

### (Deodorization Step)

The method for producing a purified glyceride composition of the present invention may include a deodorization step of a glyceride composition subjected to the alkaline clay treatment step. In this case, the alkaline clay treatment step corresponds to a bleaching step of a glyceride composition. Deodorization may be performed under temperature conditions of 100 to 260°C used in a usual method for producing oils and fats, or may be performed under lower temperature conditions of 100 to 250°C. In the deodorization step, temperature conditions are preferably temperature conditions of 150 to 230°C, and more preferably temperature conditions of 180 to 220°C. It is possible to expect that higher effect of suppressing formation of 3-MCPD and/or a fatty acid ester of 3-MCPD in a purified glyceride composition, and higher effect of reducing the contents of these components are exerted by performing deodorization of a glyceride composition under lower temperature conditions than those used in a usual method for producing oils and fats.

There is no particular limitation on other conditions in the deodorization step. Preferably, pressure reduction or steam blowing is performed and, more preferably, pressure reduction and steam blowing are performed. The deodorization time is preferably from 15 to 150 minutes, and more preferably from 20 to 100 minutes.

### (Re-Purification Step)

In a method for producing purified glyceride composition of the present invention, the purified glyceride composition subjected to the deodorization step may be re-purified. A re-purification step can be performed by the above-mentioned purification step and can include, for example, a re-deodorization step and a re-bleaching step, or a re-deodorization step. It is particularly preferred to perform a re-bleaching step. The white clay used in the re-bleaching step is not particularly limited, and may be an alkaline clay, an acid clay, or an active white clay which is an acid clay subjected to an activation treatment.

In a first bleaching step (alkaline clay treatment step) before a re- bleaching step, if a glyceride composition is brought into contact with an alkaline clay, the residual amount of a chlorine compound in a purified glyceride composition is sufficiently reduced. Therefore, regardless of the kind of a white clay used in the re- bleaching step, it is possible to remarkably reduce the amount of 3-MCPD which may be formed in the re-deodorization step after the re- bleaching step.

The conditions in the re- bleaching step are not particularly limited and may be the conditions used in a usual method for producing oils and fats, like as the first bleaching step before the re- bleaching step. For example, after adding a white clay to a purified glyceride composition, heating may be performed under reduced pressure at 80 to 150°C for 5 to 60 minutes. After completion of re- bleaching, the white clay is removed by filtration or the like, and thus bleached oil can be obtained.

The re-bleached oil obtained after the re-bleaching step may be further re-deodorized. The conditions in the re-deodorization step are not particularly limited and may be the conditions used in a usual method for producing oils and fats, like the first deodorization step.

### (Purified Glyceride Composition Obtained by Production Method of the Present Invention)

A purified glyceride composition of the present invention is characterized by being obtained using the above-mentioned method for the producing purified glyceride composition of the present invention. According to the purified glyceride composition of the present invention, it is possible to expect that the contents of 3-MCPD, and a fatty acid ester of 3-MCPD in the purified glyceride composition are reduced.

### EXAMPLES

The purified glyceride composition will be described in more detail by way of Examples of the present invention, but the present invention is not intended to be limited to these descriptions at all.

Under the following conditions, a study was made on the effect of suppressing formation of 3-MCPD, and a fatty acid ester of 3-MCPD in a purified glyceride composition, and possibility of reduction of the contents of these components. Study of White Clay used in White Clay Treatment Step

A study was made on an influence of a white clay used in a white clay treatment step on suppression of formation of 3-MCPD, and a fatty acid ester of 3-MCPD in a purified glyceride composition.

### (Measurement of pH of White Clay)

To 20 g of deionized water was added 0.1 g of an alkaline clay used in Examples or an acid clay used in Comparative Examples, and then the pH of the clay was measured by a portable pH meter (model name: PH-81, manufactured by Tokyo Glass Kikai K.K.) while stirring using a stirrer. As a result, the pH of the acid clay (product name: Super A, manufactured by Wantotik Clay Products Sdn Bhd, Inc.) was 6.05, and the pH of the alkaline clay (product name: NB14000, manufactured by Natural Bleach Sdn Bhd, Inc.) was 9.53.

### Comparative Example 1

To crude palm oil (amount expressed in terms of 3-MCPD 0.0 ppm) was added an acid clay (product name: Super A, manufactured by Wantotik Clay Products Sdn Bhd, Inc.) in the amount of 1% by mass based on the amount of the crude palm oil, followed by bleaching under reduced pressure at 110°C for 30 minute and further removal of the acid clay through filtration to obtain bleached oil. Then, while blowing steam into the bleached oil, a deodorization treatment was performed under reduced pressure at 260°C for 1 hour to obtain a purified glyceride composition of Comparative Example 1.

### Example 1

A purified glyceride composition of Example 1 was obtained in the same manner as in Comparative Example 1, except that 1% by mass of an alkaline clay (product name: Bleaching Earth, manufactured by Natural Bleach Sdn Bhd, Inc.) was used in place of 1% by mass of the acid clay.

### Example 2

A purified glyceride composition of Example 2 was obtained in the same manner as in Example 1, except that the temperature of the deodorization treatment was changed to a temperature of 230°C.

### Comparative Example 2

A purified glyceride composition of Comparative Example 2 was obtained in the same manner as in Comparative Example 1, except that the amount of the acid clay was changed to 2% by mass.

### Example 3

A purified glyceride composition of Example 3 was obtained in the same manner as in Example 1, except that the amount of the alkaline clay was changed to 2% by mass.

### Example 4

A purified glyceride composition of Example 4 was obtained in the same manner as in Example 2, except that the amount of the alkaline clay was changed to 2% by mass.

### (Quantitative Determination Method)

Quantitative determination of 3-MCPD and a 3-MCPD fatty acid ester in a purified glyceride composition was performed in accordance with a modified method of the German standard method (DGF Standard Methods C-III 18(09)). According to this method, since 3-MCPD and a 3-MCPD fatty acid ester are converted into separated 3-MCPD in preparing a measurement sample, it is possible to measure the total amount of 3-MCPD and a 3-MCPD fatty acid ester as separated 3-MCPD.

After adding 50 µL of an internal standard substance (3-MCPD-d5 20 µg/mL solution) to 100 mg of each sample of a glyceride composition in Comparative Examples 1 to 3 and Examples 1 to 6, 1 mL of a sodium methoxide solution (0.5 mol/L methanol) was added and the mixture was reacted at room temperature, thereby decomposing an ester by saponification. Subsequently, 3 mL of an aqueous sodium bromide solution (50%) containing a small amount of acetic acid and 3 mL of hexane were added thereto, followed by mixing and further removal of the hexane. At this time, 3-MCPD and a 3-MCPD fatty acid ester were entirely converted into separated 3-MCPD. Thereafter, derivatization with 500 µL of an aqueous phenylboric acid solution (12.5%) was performed, the obtained derivative was extracted with 2 mL of hexane and the measurement was performed by a gas chromatography mass spectrometer.

Using the chromatogram obtained by the measurement with the gas chromatography mass spectrometer, the ionic strength of 3-MCPD-d5 as the internal standard was compared with that of 3-MCPD, thereby calculating the total amount of 3-MCPD and a 3-MCPD fatty acid ester in the glyceride composition in terms of separated 3-MCPD.

### (GC-MS Analytical Conditions)

Analyzer: manufactured by Shimadzu Corporation, model name:QP-2010
Column: product name: HP-5MS, manufactured by Agilent Technology (30 m in length, 0.25 mm in diameter)
column temperature: 60°C (1 minute) to 120°C (temperature rise rate of 10°C/minute) to 190°C (temperature rise rate of 6°C/minute) to 280°C (temperature rise rate of 20°C/minute)
Detector: MS (EI, SIM Mode)
Splitless: Injection of 1 µL
Carrier gas: He

The results in Comparative Examples 1 to 2 and Examples 1 to 4 are shown in Table 1. Hereinafter, "amount expressed in terms of 3-MCPD" in the table indicates the total amount of 3-MCPD, and a fatty acid ester of 3-MCPD in a purified glyceride composition expressed in terms of separated 3-MCPD.

**[Table 1]**

| | Decolorization conditions | Deodorization temperature condition | Amount expressed in terms of 3-MCPD (ppm) |
|---|---|---|---|
| Comparative Example 1 | Acid clay 110°C, 30 minutes, 1% by mass | 260°C | 3.4 |
| Example 1 | Alkaline clay 110°C, 30 minutes, 1% by mass | 260°C | 1.4 |
| Example 2 | Alkaline clay 110°C, 30 minutes, 1% by mass | 230°C | 1.3 |
| Comparative Example 2 | Acid clay 110°C, 30 minutes, 2% by mass | 260°C | 2.4 |
| Example 3 | Alkaline clay 110°C, 30 minutes, 2% by mass | 260°C | 1.1 |
| Example 4 | Alkaline clay 110°C, 30 minutes, 2% by mass | 230°C | 0.7 |

The results revealed that the total amount of 3-MCPD, and a fatty acid ester of 3-MCPD in the obtained purified glyceride composition (amount expressed in terms of 3-MCPD) is drastically reduced by bringing crude palm oil into contact with an alkaline clay in a white clay treatment step as compared with the case of bringing crude palm oil into contact with an acid clay (Table 1: Examples 1 to 4). When the deodorization temperature condition is 230°C in the deodorization step after the white clay treatment step, larger effect of reducing the total amount of 3-MCPD, and a fatty acid ester of 3-MCPD (amount expressed in terms of 3-MCPD) was exerted as compared with the case where the deodorization temperature condition is 260°C (Table 1: Examples 1 to 4). Study of White Clay Treatment in Re- bleaching Step

The white clay treatment step in the present invention may be a bleaching step. In this case, it is possible to further provide a bleaching step (i.e. re-bleaching step). Thus, a study was made on an influence of a white clay used in the white clay treatment step (bleaching step) on suppression of formation of 3-MCPD, and a fatty acid ester of 3-MCPD in a purified glyceride composition when a glyceride composition is further re- bleached.

### Comparative Example 3

To the purified glyceride composition obtained in Comparative Example 2 was added 1.5% by mass of an acid clay (manufactured by MIZUSAWA INDUSTRIAL CHEMICALS, LTD.), followed by re- bleaching under reduced pressure at 110°C for 20 minutes and further removal of the acid clay through filtration to obtain re- bleached oil. Subsequently, while blowing steam into the re- bleached oil, re-deodorization was performed under reduced pressure at 260°C for 90 minutes to obtain a purified glyceride composition of Comparative Example 3.

### Example 5

A purified glyceride composition of Example 5 was obtained by applying the same manner as in Comparative Example 3 to the purified glyceride composition obtained in Example 4.

### Example 6

A purified glyceride composition of Example 6 was obtained in the same manner as in Example 5, except that the temperature was changed to 240°C.

Calculation of the amount expressed in terms of 3-MCPD was performed in accordance with the description in the quantitative determination method. The results in Comparative Example 3, and Examples 5 and 6 are shown in Table 2.

**[Table 2]**

| | Amount expressed in terms of in re-decolorization (ppm) | Amount expressed in terms of 3-MCPD in re-deodorization (ppm) |
|---|---|---|
| Comparative Example 3 | 3.2 | 3.3 |
| Example 5 | 0.8 | 0.9 |
| Example 6 | 0.8 | 0.9 |

When crude palm oil is brought into contact with an alkaline clay before a deodorization step, the total amount of 3-MCPD, and a fatty acid ester of 3-MCPD (amount expressed in terms of 3-MCPD) was suppressed even if the obtained purified glyceride composition is brought into contact with an acid clay in the re-bleaching step (Examples 5 and 6).

## Claims

1. A method for producing a purified glyceride composition, **characterized by** comprising an alkaline clay treatment step wherein a glyceride composition, which has not been subjected to a deodorization step, and
an alkaline clay
are brought into contact with each other,
wherein the alkaline clay has the following composition: 50 to 60% by mass of SiO₂, 10 to 20% by mass of Al₂O₃, 3 to 10% by mass of Fe₂O₃, 2 to 9% by mass of MgO and 1 to 5% by mass of CaO.

2. The method for producing the purified glyceride composition according to claim 1, wherein the alkaline clay treatment step is a bleaching step, and a deodorization step is further included after the alkaline clay treatment step.

3. The method for producing the purified glyceride composition according to claim 2, wherein the deodorization step is performed under temperature conditions of 100 to 260°C.

4. The method for producing the purified glyceride composition according to claim 2 or 3, further comprising a re-purification step after the deodorization step.

5. The method for producing the purified glyceride composition according to claim 4, wherein the re-purification step includes a re- bleaching step.

6. The method for producing the purified glyceride composition according to claim 5, wherein the re- bleaching step is performed by bringing into contact with an acid clay.

7. The method for producing the purified glyceride composition according to any one of claims 1 to 6, wherein the glyceride composition is palm oil.

## Patentansprüche

1. Verfahren zur Herstellung einer gereinigten Glyceridzusammensetzung, **dadurch gekennzeichnet, dass** es einen Schritt der Behandlung mit alkalischem Ton umfasst, worin
eine Glyceridzusammensetzung, die keinem Desodorisierungsschritt ausgesetzt wurde,
und ein alkalischer Ton
in Kontakt mit einander gebracht werden,
wobei der alkalische Ton die folgende Zusammensetzung aufweist: 50 bis 60 Massen% SiO₂, 10 bis 20 Massen% Al₂O₃, 3 bis 10 Massen% Fe₂O₃, 2 bis 9 Massen% MgO und 1 bis 5 Massen% CaO.

2. Verfahren zur Herstellung der gereinigten Glyceridzusammensetzung gemäss Anspruch 1, worin der Schritt der Behandlung mit alkalischem Ton ein Bleichungsschritt ist, und zudem ein Desodorisierungsschritt nach dem Schritt der Behandlung mit alkalischem Ton vorgesehen ist.

3. Verfahren zur Herstellung der gereinigten Glyceridzusammensetzung gemäss Anspruch 2, worin der Desodorisierungsschritt bei Temperaturbedingungen von 100 bis 260°C durchgeführt wird.

4. Verfahren zur Herstellung der gereinigten Glyceridzusammensetzung gemäss Anspruch 2 oder 3, zudem mit einem Schritt der Nachreinigung nach dem Desodorisierungsschritt.

5. Verfahren zur Herstellung der gereinigten Glyceridzusammensetzung gemäss Anspruch 4, worin der Schritt der Nachreinigung einen Schritt der Nachbleichung umfasst.

6. Verfahren zur Herstellung der gereinigten Glyceridzusammensetzung gemäss Anspruch 5, worin der Schritt der Nachbleichung durch Inkontaktbringen mit einem sauren Ton durchgeführt wird.

7. Verfahren zur Herstellung der gereinigten Glyceridzusammensetzung gemäss irgendeinem der Ansprüche 1 bis 6, worin die Glyceridzusammensetzung Palmöl ist.

## Revendications

1. Procédé pour produire une composition glycéridique purifiée, **caractérisé en ce qu'**il comprend une étape de traitement à l'argile alcaline, dans laquelle
une composition glycéridique, qui n'a pas été soumise à une étape de désodorisation,
et une argile alcaline
sont mises en contact l'une avec l'autre,
et où l'argile alcaline a la composition suivante: 50 à 60% par masse de SiO₂, 10 à 20% par masse de Al₂O₃, 3 à 10% par masse de Fe₂O₃, 2 à 9% par masse de MgO et 1 à 5% par masse de CaO.

2. Le procédé pour produire la composition glycéridique purifiée selon la revendication 1, dans lequel l'étape de traitement à l'argile alcaline est une étape de blanchiment, et une étape de désodorisation est en outre comprise après l'étape de traitement à l'argile alcaline.

3. Le procédé pour produire la composition glycéridique purifiée selon la revendication 2, dans lequel l'étape de désodorisation est effectuée à des conditions de température de 100 à 260°C.

4. Le procédé pour produire la composition glycéridique purifiée selon la revendication 2 ou 3, comprenant en outre une étape de re-purification après l'étape de désodorisation.

5. Le procédé pour produire la composition glycéridique purifiée selon la revendication 4, dans lequel l'étape de re-purification comprend une étape de re-blanchiment.

6. Le procédé pour produire la composition glycéridique purifiée selon la revendication 5, dans lequel l'étape de re-blanchiment est effectuée en mettant en contact avec une argile acide.

7. Le procédé pour produire la composition glycéridique purifiée selon l'une quelconque des revendications 1 à 6, dans lequel la composition glycéridique est l'huile de palme.
